# EUROPEAN PATENT APPLICATION

(11) **EP 4 614 994 A1**
(43) Date of publication of application: **10.09.2025**
(21) Application number: 25155742.7
(22) Date of filing: 04.02.2025
(51) Int. Cl.: H04N 23/67, H04N 23/958

(54) **APPARATUS, METHOD, AND PROGRAM**

(30) Priority: 05.03.2024 JP 2024033034
(71) Applicant: Yokogawa Electric Corporation, Tokyo 180-8750 (JP)
(72) Inventor: Akiyoshi, Ryutaro, Musashino-shi, Tokyo, 180-8750 (JP)
(74) Representative: Hoffmann Eitle

(57) **Abstract**

(Solution) There is provided an apparatus including: an acquiring unit which acquires a plurality of images captured by changing a position of a focal plane relative to a subject in an image-capturing direction; a selecting unit which selects, out of the plurality of images, two or more images which have higher contrast than a reference value; a composing unit which composes the two or more images to generate a composite image; and a sub-image generating unit which generates, from each of the plurality of images, a sub-image of at least one position in the image which is a common position among the plurality of images, wherein the sub-image includes a plurality of sub-images, the selecting unit selects, out of the plurality of sub-images for each position in the image, two or more sub-images which have higher contrast than the reference value, to select, out of the plurality of images, the two or more images which have higher contrast than the reference value, and the composing unit composes the two or more sub-images for each position in the image to generate a composite sub-image, to composes the two or more images to generate the composite image.

## Description

### BACKGROUND

### 1. TECHNICAL FIELD

The present invention relates to an apparatus, a method, and a program.

### 2. RELATED ART

Patent document 1, for example, says "merges image objects from a first optimal focal plane and image objects from a second optimal focal plane" (claim 1 of Patent document 1) and so on.

### Prior Art Document

### Patent Document

Patent Document 1: Japanese Patent Application Publication No. 2023-17808
Patent Document 2: U.S. Patent No. 8199997 specification

### SUMMARY

According to a first aspect of the present invention, there is provided an apparatus including: an acquiring unit which acquires a plurality of images captured by changing a position of a focal plane relative to a subject in an image-capturing direction; a selecting unit which selects, out of the plurality of images, two or more images which have higher contrast than a reference value; and a composing unit which composes the two or more images to generate a composite image.

The above-described apparatus may further include: a sub-image generating unit which generates, from each of the plurality of images, a sub-image of at least one position in the image which is a common position among the plurality of images, wherein the sub-image includes a plurality of sub-images, the selecting unit selects, out of the plurality of sub-images for each position in the image, two or more sub-images which have higher contrast than the reference value, to select, out of the plurality of images, the two or more images which have higher contrast than the reference value, and the composing unit composes the two or more sub-images for each position in the image to generate a composite sub-image, to compose the two or more images to generate the composite image.

The above-described apparatus may further include: a size detecting unit which detects a size of the subject in the image, wherein the sub-image generating unit generates each sub-image in the size detected by the size detecting unit.

Any apparatus of the above-described apparatuses which include the sub-image generating unit may further include: a position detecting unit which detects a position of the subject in the image, wherein the sub-image generating unit generates each sub-image at the position detected by the position detecting unit.

According to any apparatus of the above-described apparatuses which include the sub-image generating unit, the sub-image generating unit may generate, from each of the plurality of images, a sub-image for each of the plurality of positions in the image, and the selecting unit, for each of the plurality of positions in the image, may select two sub-images which have higher contrast than the reference value and which are captured by using, as focal planes, two positions which are spaced apart in the image-capturing direction by a predetermined common interval. The common interval may be a sequence of intervals which lies between two focal planes which are used to capture a plurality of images and has at least one focal plane sandwiched between the intervals in the sequence. The common interval may be set based on the size of the subject detected by the size detecting unit. The two sub-images to be selected may be captured by using, as focal planes, positions nearer side and further side to the center of the subject.

According to any apparatus of the above-described apparatuses which include the sub-image generating unit, the sub-image generating unit may generate, from each of the plurality of images, a sub-image for each of the plurality of positions in the image, and the composing unit may merge separate sub-images for separate positions in the image and which include the composite sub-image, and also adjust brightness between the separate sub-images. The composing unit may adjust brightness of at least one of a plurality of sub-images so that a difference in brightness between the sub-images to be composed is within a reference range.

According to the above-described apparatus, in response to any of a plurality of sub-images generated by the sub-image generating unit for a same position in the image having equal or lower contrast than the reference value, the selecting unit may select a single sub-image out of the plurality of sub-images for the same position, and the composing unit may merge separate sub-images including the single sub-image as separate sub-images and sub-images for the same position.

According to any apparatus of the above-described apparatuses which include the sub-image generating unit, the acquiring unit may acquire the plurality of images captured with the plurality of subjects arranged at different positions from each other in the image-capturing direction.

Any of the above-described apparatus may further include an image-capturing unit which captures the plurality of images, wherein the acquiring unit may acquire the plurality of images from the image-capturing unit.

The above-described apparatus may further include: an image-capturing control unit which changes a position of a focal plane relative to the subject in the image-capturing direction, and causes the image-capturing unit to capture the plurality of images.

According to the above-described apparatus, the image-capturing control unit, in response to a not-in-focus image being captured, may cause the image-capturing unit to capture the plurality of images once again with narrower intervals between adjacent focal planes in the image-capturing direction.

According to any of the above-described apparatus, the subject may be a cell or a microorganism.

According to the above-described apparatus, the subject may be adhered to a flexible and translucent sheet-shaped member.

According to any of the above-described apparatus in which the subject is a cell or a microorganism, the subject may be adhered to an interior of a culture bag.

According to a second aspect of the present invention, there is provided a method including: acquiring a plurality of images captured by changing a position of a focal plane relative to a subject in an image-capturing direction; selecting, out of the plurality of images, two or more images which have higher contrast than a reference value; and composing the two or more images to generate a composite image.

According to a third aspect of the present invention, there is provided a program that when executed by a computer, causes the computer to function as: an acquiring unit which acquires a plurality of images captured by changing a position of a focal plane relative to a subject in an image-capturing direction; a selecting unit which selects, out of the plurality of images, two or more images which have higher contrast than a reference value; and a composing unit which composes the two or more images to generate a composite image.

Note that the summary clause does not necessarily describe all necessary features of the embodiments of the present invention. The present invention may also be a sub-combination of the features described above.

### BRIEF DESCRIPTION OF THE DRAWINGS

Fig. 1 shows an apparatus 1 according to an embodiment.
Fig. 2 shows operations of the apparatus 1.
Fig. 3 shows a culture bag 2 along with a supporting device for capturing 3.
Fig. 4 shows a cross-section of the culture bag 2 and the supporting device 3.
Fig. 5 shows a partially enlarged view of Fig. 4.
Fig. 6 shows sub-images before and after image composition.
Fig. 7 shows an example of a computer 1200 in which a plurality of aspects of the present invention may be wholly or partially embodied.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

### (APPARATUS 1)

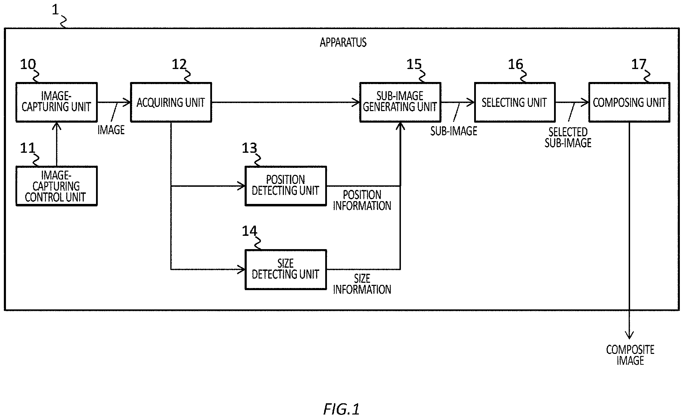

Fig. 1 shows an apparatus 1 according to the present embodiment. The apparatus 1 may include an image-capturing unit 10, an image-capturing control unit 11, an acquiring unit 12, a position detecting unit 13, a size detecting unit 14, a sub-image generating unit 15, a selecting unit 16, and a composing unit 17.

### ((IMAGE-CAPTURING UNIT 10))

The image-capturing unit 10 captures a plurality of images. Each image may include at least one subject, and in the present embodiment, includes a plurality of subjects, for example.

The subject is a target to be captured, and in the present embodiment, may be a cell or a microorganism for example. The cell or the microorganism as the subject may be one used to manufacture regenerative medicine products or cellar medicine products, and may be an iPS cell (a 201B7 strain) for example. The subject may be adhered to a flexible and translucent sheet-shaped member, and may be adhered to a sheet-shaped culture medium, for example. The subject may be adhered to an interior of a culture bag. The culture bag may be for culturing a cell or a microorganism adhered to its interior, and may be filled with culture solution to maintain its inside as a closed environment. The culture bag may be made of soft resin.

The image-capturing unit 10 may have a microscope to enlarge and capture the subject. The microscope may be any type of microscope, such as a bright field microscope, a phase-contrast microscope, or the like. The image-capturing unit 10 may capture the subject arranged on a support member (also referred to as a stage), which is not shown. Distance from the stage to the subject to be captured may not be constant due to deflection or deformation of the sheet-shaped member or the culture bag to which the subject adheres. The image-capturing unit 10 may provide each image which it captures to the acquiring unit 12.

### ((IMAGE-CAPTURING CONTROL UNIT 11))

The image-capturing control unit 11 changes a position of a focal plane relative to the subject in an image-capturing direction, and causes the image-capturing unit 10 to capture a plurality of images (also referred to as focus bracket images). The image-capturing control unit 11 may incrementally change the position of the focal plane relative to the subject by a reference interval to capture the plurality of focus bracket images. The plurality of focus bracket images may differ from each other in the position of the focal plane relative to the subject.

The image-capturing direction may be a depth direction, and may be an optical axis direction of the image-capturing unit 10. To change the position of the focal plane relative to the subject in the image-capturing direction may be to change a relative position of the focal plane to the subject in the image-capturing direction. The image-capturing control unit 11 may change the position of the focal plane relative to the subject by moving at least one of an optical system of the image-capturing unit 10 or the support member of the subject.

The image-capturing control unit 11 may cause the plurality of focus bracket images to be captured while a position of each subject is maintained, and may cause the plurality of focus bracket images to be captured while the plurality of subjects are arranged at different positions from each other in the image-capturing direction. The image-capturing control unit 11 may control the position of the focal plane so that a same subject is captured in at least two focus bracket images.

### ((ACQUIRING UNIT 12))

The acquiring unit 12 acquires the plurality of focus bracket images which are captured by changing the position of the focal plane relative to the subject in the image-capturing direction. The acquiring unit 12 may acquire the plurality of focus bracket images from the image-capturing unit 10. The acquiring unit 12 may provide each of the plurality of focus bracket images which it acquires to the position detecting unit 13, the size detecting unit 14, and the sub-image generating unit 15.

### ((POSITION DETECTING UNIT 13))

The position detecting unit 13 detects a position of the subject in a focus bracket image. The position detecting unit 13 may detect, as the position of the subject, a pixel position in the image, e.g., a position represented in a coordinate system which uses a vertical direction and a horizontal direction of the image as coordinate axes. The position of the subject according to the present embodiment may be a coordinate point of a center of the subject, or may be a coordinate range of a region which the subject occupies in the coordinate system. When a plurality of subjects exist in the focus bracket image, the position detecting unit 13 may detect the position of each subject.

The position detecting unit 13 may detect the position of each subject in each of the plurality of focus bracket images. The position detecting unit 13 may detect the position of each subject in an image-capturing region regardless of the image-capturing direction, and when a same subject is captured in two or more focus bracket images, may detect a single position, e.g., a position represented by using an average coordinate, as a position of the same subject in these focus bracket images. The position detecting unit 13 may provide the position of each subject which it detects to the sub-image generating unit 15.

### ((SIZE DETECTING UNIT 14))

The size detecting unit 14 detects a size of the subject in the focus bracket image. The size detecting unit 14 may detect, as the size of the subject, a size represented by a length in the vertical direction and a length in the horizontal direction of the subject in the image. When a plurality of subjects exist in the focus bracket image, the size detecting unit 14 may detect the size of each subject.

The size detecting unit 14 may detect the size of the subject in each of the plurality of focus bracket images. When a same subject is captured in two or more focus bracket images, the size detecting unit 14 may detect, as the size of the same subject, the largest size of the sizes of the same subject in these focus bracket images. The size detecting unit 14 may provide the size of each subject which it detects to the sub-image generating unit 15.

### ((SUB-IMAGE GENERATING UNIT 15))

The sub-image generating unit 15 generates, from each of the plurality of focus bracket images, a sub-image of at least one position in the image which is a common position among the plurality of focus bracket images. For example, the sub-image generating unit 15 may generate, from each of the plurality of focus bracket images, a sub-image of a center position of the image. The sub-image generating unit 15 according to the present embodiment may generate, from each of the plurality of focus bracket images, the sub-image for each of a plurality of positions in the focus bracket image.

The sub-image generating unit 15 may generate each sub-image at the position detected by the position detecting unit 13. For example, the sub-image generating unit 15 in the present embodiment may generate, from each of the plurality of focus bracket images, the sub-image at a common position for each subject.

The sub-image generating unit 15 may generate each sub-image in the size detected by the size detecting unit 14. For example, the sub-image generating unit 15 in the present embodiment may generate, from each of the plurality of focus bracket images, the sub-image in a common size for each subject. The sub-image generating unit 15 may generate, from each of the plurality of focus bracket images, and for each position detected by the position detecting unit 13, the sub-image in the common size detected by the size detecting unit 14 for the subject in that position. The size of each sub-image may be different for each position in the image.

In each sub-image generated at the position detected by the position detecting unit 13, at least a part of the subject may be captured. A plurality of sub-images generated for a same position from different focus bracket images may be different from each other in contrast, brightness, sharpness, or the like. For example, the contrast of the sub-image may be minimum when the focal plane is located at a position of an adherence surface of the subject (for example, at a surface of the sheet-shaped member, or at an interior of the culture bag, in the present embodiment,) or in the proximity of the position, and may be "dark contrast" or "bright contrast" when the focal plane moves towards further side or nearer side from the position. The subject may contact, by its surface, the sheet-shaped member or the culture bag at the adherence surface, and the cross sectional area of the subject perpendicular to the image-capturing direction may be maximum. The "dark contrast" may refer to brightness of the subject being lower than a first reference brightness, as lights passing through each unit inside a sample are opposite in phase and weaken each other. The "bright contrast" may refer to brightness of the subject being higher than a second reference brightness, as lights passing through each unit inside a sample are in phase and strengthen each other. The first reference brightness and the second reference brightness may be set to any value.

The sub-image generating unit 15 may also generate each sub-image at a position where no subject is detected by the position detecting unit 13. The sub-image generating unit 15 may generate, as the sub-image, a remaining portion obtained by removing, from the focus bracket images, each sub-image generated for each position where a subject is detected. Each sub-image for each position where no subject is detected may be approximately uniform in the contrast, the brightness, the sharpness, or the like.

The sub-image generating unit 15 may provide, for each position in the image, the sub-image it generates to the composing unit 17. For example, the sub-image generating unit 15 may provide each sub-image to the selecting unit 16 with position information in the image associated with it.

### ((SELECTING UNIT 16))

The selecting unit 16 selects, out of the plurality of focus bracket images, two or more focus bracket images which have higher contrast than a reference value. The selecting unit 16 may select two focus bracket images out of the plurality of focus bracket images acquired by the acquiring unit 12. The image to be selected in the present embodiment may be a sub-image, for example. In this case, the selecting unit 16 may select, out of the plurality of sub-images for each position in the image, two or more sub-images which have higher contrast than the reference value, to select, out of the plurality of focus bracket images, the two or more images which have higher contrast than the reference value.

The contrast may be a value which represents the difference between lightness and darkness in an image. For example, when brightness for each pixel is expressed in pixel value, the contrast may be calculated by a formula Contrast = (Iₘₐₓ - Iₘᵢₙ) / (Iₘₐₓ + Iₘᵢₙ), where Iₘₐₓ is a maximum pixel value in the image, and Iₘᵢₙ is a minimum pixel value in the image. The reference value may be, for example, a value of 80% of a possible maximum pixel value, which may be 204 (= 255*0.8) when the pixel value may be 0 to 255. Note that at a position where the subject exists among positions in the image, at least two sub-images may have higher contrast than the reference value. At a position where no subject exists among positions in the image, each sub-image may have lower contrast than the reference value.

At the position where the plurality of sub-images have higher contrast than the reference value, e.g., at the position in the image where the subject exists among each position in the image, the selecting unit 16 may select two sub-images which have higher contrast than the reference value. For example, the selecting unit 16 may, for each of the plurality of positions in the image, select two sub-images which have higher contrast than the reference value and which are captured by using, as focal planes, two positions which are spaced apart in the image-capturing direction by a predetermined common interval. The two sub-images which are captured by using, as focal planes, two positions may be sub-images generated from the two images which are captured by using, as focal planes, two positions.

The common interval may be a sequence of intervals which lies between two focal planes which are used to capture a plurality of focus bracket images and has at least one focal plane sandwiched between the intervals in the sequence, and a length of the common interval may be obtained by multiplying an interval between adjacent focal planes in the image-capturing direction, i.e., the reference interval, by any integer equal to or greater than two. For example, the common interval may be four times as long as the reference interval. In this case, the selecting unit 16 may select, at a first position in the image, a focus bracket image captured by using, as a focal plane, an n₁-th position from the furthest side in the image-capturing direction, and a focus bracket image captured by using, as a focal plane, an (n₁ + 4)th position from the furthest side in the image-capturing direction (where n₁ is a natural number), and may select, at a second position in the image, a focus bracket image captured by using, as a focal plane, an n₂-th position from the furthest side in the image-capturing direction, and a focus bracket image captured by using, as a focal plane, an (n₂ + 4)th position from the furthest side in the image-capturing direction (where n₂ is a natural number).

The common interval may be set based on the size of the subject detected by the size detecting unit 14, and may be an interval equal to or larger than half an average size of the subject, i.e., an average radius of the cell or the microorganism as the subject, for example. In this case, the two sub-images to be selected may be captured by using, as focal planes, positions nearer side and further side to the center of the subject. When the focal plane is moved, the two sub-images to be selected may be a sub-image captured by using a focal plane with which the image has the bright contrast, or a focal plane moved backward or forward from it, and a sub-image captured by using a focal plane with which the image has the dark contrast, or a focal plane moved backward or forward from it. In response to selecting one of these sub-images, the selecting unit 16 may, as another of these sub-images, select a sub-image captured by using a focal plane which is spaced apart by the common interval from the focal plane used to capture the one of these sub-images.

At the position where any of a plurality of sub-images has lower contrast than the reference value, e.g., at positions where no subject exists among each position in the image, the selecting unit 16 may select a single sub-image. In other words, in response to any of a plurality of sub-images generated by the sub-image generating unit 15 for a same position in the image having equal or lower contrast than the reference value, the selecting unit 16 may select a single sub-image out of the plurality of sub-images for the same position. The selecting unit 16 may select any single sub-image.

The selecting unit 16 may provide the sub-image(s) selected for each position in the image to the composing unit 17. For example, the selecting unit 16 may provide each sub-image to the composing unit 17 with position information in the image associated to it.

### ((COMPOSING UNIT 17))

The composing unit 17 composes two or more images selected by the selecting unit 16 to generate a composite image. The composite image may be an image which includes the subject.

To generate a composite image by composing two or more images may be to generate, from two or more images in a same size, a single composite image in the same size. The image to be composed in the present embodiment may be the sub-image, for example. In this case, the composing unit 17 may compose the two or more sub-images (for example, two sub-images in the present embodiment) selected by the selecting unit 16 for each position in the image to generate a composite sub-image, to compose the two or more images to generate the composite image.

The composing unit 17 may compose the sub-images so that each part of the subject (for example, a subcellular organelle or the like) is sharply captured in a resulting composite sub-image. The composing unit 17 may generate a single composite sub-image by focus stacking the two or more sub-images, and may focus stack by using a conventionally well-known algorithm for image composition. Focus stacking may refer to generating a single composite image by extracting and merging in-focus portions of a plurality of images each of which is captured by using, as a focal plane, a different position from each other.

The composing unit 17 may generate the composite image by detecting a pixel which has the highest sharpness for each position of pixels from two or more sub-images to be composed, and setting the detected pixel value of the pixel as a pixel value of the position in the composite image. For example, the composing unit 17 may compose the sub-images by using a technique according to Patent document 2. The sharpness of a pixel may be calculated by using a conventionally well-known approach. The composing unit 17 may compose the sub-images by using "Cell Pathfinder", software for image processing and image analysis made by Yokogawa Electric Corporation.

In the sub-image generated by the composition, at least a part of the subject may be captured. At the position where a single sub-image is selected by the selecting unit 16, e.g., at the position where no subject exists among each position in the image, the composing unit 17 may not compose sub-images.

The composing unit 17 may merge separate sub-images from separate positions in the image and also adjust brightness between the separate sub-images. The composing unit 17 may adjust brightness of at least one of a plurality of sub-images so that a difference in brightness between the sub-images to be composed is within a reference range. The composing unit 17 may first adjust brightness of the sub-images and then merge the sub-images, or may first merge the sub-images and then adjust brightness of the sub-images included in the merged image.

To merge the sub-images may be to generate a larger image by merging the sub-images in the in-plane direction of the image. An image generated by merging the sub-images may be in a same size as an original image from which the sub-images are generated e.g., an image captured by the image-capturing unit 10. The separate sub-images to be merged may include a composite sub-image. For the position where two sub-images selected by the selecting unit 16 are composed among each position in the image, the composing unit 17 may use, as the sub-image to be merged, a sub-image generated by the composition. For the position where a single sub-image is selected by the selecting unit 16 among each position in the image, the composing unit 17 may use, as the sub-image to be merged, the single sub-image. In other words, the composing unit 17 may merge, as separate sub-images to be merged and sub-images for the position where a single sub-image is selected, separate sub-images including the single sub-image.

As described above, the apparatus 1 generates, from each of the plurality of focus bracket images, a sub-image of at least one position in the image which is a common position among the plurality of focus bracket images, and selects, from the plurality of sub-images for each position in the image, two or more sub-images which have higher contrast than the reference value, and composes the sub-images selected for each position in the image. This allows for acquiring a sub-image which has high contrast for each position in the image, even when capturing a subject a position of which is not determined in the image-capturing direction.

Also, a sub-image which includes the entire subject and has high contrast can be acquired because each sub-image is generated in the size of the subject in the focus bracket images.

Also, a sub-image which reliably includes the subject and has high contrast can be acquired because each sub-image is generated at the position of the subject in the focus bracket images.

Further, a sub-image is generated from each of the plurality of focus bracket images for each of the plurality of positions in the image, and two sub-images which have higher contrast than the reference value and which are captured by using, as focal planes, two positions which are spaced apart in the image-capturing direction by the predetermined common interval are selected. This allows for reliably acquiring, even when capturing subjects distributed in the image-capturing direction, an image which has high contrast in each sub-image if the subjects have similar sizes. Also, this can simplify the process of selecting two images one by one for each position in the image, because selecting one sub-image for each position in the image determines which another sub-image is to be selected.

Further, separate sub-images for separate positions in the image and which include a composite sub-image generated by the composition are merged to generate a composite image, and brightness is also adjusted between the separate sub-images. This allows for preventing brightness for each sub-image in a merged composite image from being varied.

Further, in response to any of a plurality of sub-images generated for a same position in the image having equal or lower contrast than the reference value, a single sub-image out of the plurality of sub-images for the same position is selected, and as separate sub-images to be merged with each other and sub-images for the same position, separate sub-images including the single sub-image are merged. This allows for omitting the process of composing sub-images at a position where no subject exists and where any of the sub-images of focus bracket images has equal or lower contrast than the reference value.

Also, a sub-image which has high contrast for each subject that is distributed in the image-capturing direction can be acquired because a plurality of focus bracket images captured with the plurality of subjects arranged at different positions from each other in the image-capturing direction are acquired.

Also, a sub-image which has high contrast can be acquired immediately compared to when the plurality of focus bracket images are acquired from outside the apparatus because the plurality of focus bracket images are acquired from the image-capturing unit 10.

Also, a sub-image which has high contrast can be reliably acquired, because the image-capturing unit 10 is controlled to capture a plurality of focus bracket images by changing the position of the focal plane relative to the subject in the image-capturing direction.

Also, a sub-image which has high contrast can be acquired for a cell or a microorganism, as the subject is the cell or the microorganism.

Further, the subject is adhered to the flexible and translucent sheet-shaped member. This allows for acquiring a sub-image which has high contrast for each cell or microorganism which adheres to the flexible sheet-shaped member and distributes in the image-capturing direction.

Further, the subject is adhered to the interior of the culture bag. This allows for acquiring a sub-image which has high contrast for each cell or microorganism which distributes in the image-capturing direction in the culture bag.

### (OPERATIONS OF APPARATUS 1)

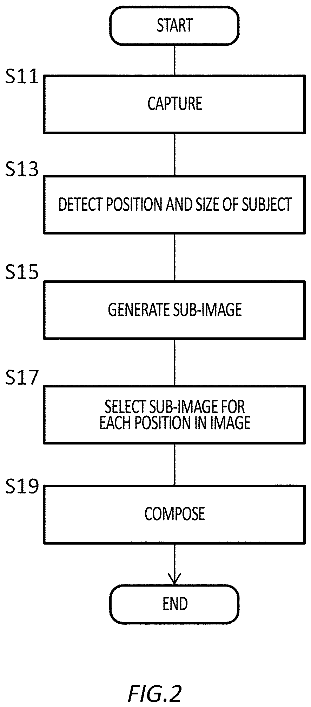

Fig. 2 shows operations of the apparatus 1. The apparatus 1 acquires a composite image by performing operations of steps S11 to S19.

In step S11, the image-capturing unit 10 captures a plurality of focus bracket images. The image-capturing unit 10 may capture the plurality of focus bracket images by capturing an image each time at least one of an optical system of the image-capturing unit 10 or a support member of a subject is moved by the image-capturing control unit 11. The plurality of focus bracket images captured by the image-capturing unit 10 may be acquired by the acquiring unit 12.

The image-capturing control unit 11 may cause the image-capturing unit 10 to capture the plurality of focus bracket images while moving the focal plane in an image-capturing direction within a range where at least a part of the subject may be located. The image-capturing control unit 11 may cause the image-capturing unit 10 to capture the plurality of focus bracket images by moving the focal plane within a range where the adherence surface of the subject is included. For example, the image-capturing control unit 11 may acquire from the user in advance a maximum height difference which may be caused due to undulation in the sheet-shaped member or the interior of the culture bag to which the cell or the microorganism as the subject is adhered. The image-capturing control unit 11 may cause the image-capturing unit 10 to capture a preset number (also referred to as a reference number) of focus bracket images while moving the focal plane within a range equal to or greater than the acquired maximum height difference.

The image-capturing control unit 11 may, in response to a not-in-focus focus bracket image being captured, cause the image-capturing unit 10 to capture the plurality of focus bracket images once again with narrower intervals between adjacent focal planes in the image-capturing direction. The not-in-focus image may be an image which does not include any position in focus. The image-capturing control unit 11 may acquire the plurality of captured focus bracket images from the image-capturing unit 10 to determine whether each of the focus bracket images is in focus by a conventionally well-known approach for in-focus determination (for example, frequency domain method, edge detection method, statistical method, or the like). The image-capturing control unit 11 may cause the image-capturing unit 10 to capture the reference number of focus bracket images with narrower intervals between the furthest side focal plane and the nearest side focal plane in the image-capturing direction, or may cause the image-capturing unit 10 to capture more focus bracket images than the reference number while maintaining intervals between the furthest side focal plane and the nearest side focal plane in the image-capturing direction.

In step S13, the position detecting unit 13 and the size detecting unit 14 detect a position and a size of the subject in the focus bracket image. The position detecting unit 13 and the size detecting unit 14 may detect the subject in the image by any approach e.g., image recognition, and detect the position and the size of the subject.

In step S15, the sub-image generating unit 15 generates, from each of the plurality of focus bracket images, a sub-image of at least one position in the image which is a common position among the plurality of focus bracket images. For example, the sub-image generating unit 15 in the present embodiment may generate a sub-image in the detected size of the subject for each detected position of the subject, and may generate, as the sub-image for the position where no subject is detected, a remaining portion obtained by removing, from the focus bracket images, these sub-images

In step S17, the selecting unit 16 selects, from the plurality of focus bracket images, two or more images which have higher contrast than the reference value. For example, the selecting unit 16 in the present embodiment may select, from the plurality of sub-images for each position of the plurality of focus bracket images, two or more sub-images which have higher contrast than the reference value. At the position where the plurality of sub-images have higher contrast than the reference value, e.g., at the position where the subject exists, the selecting unit 16 may select two sub-images which have higher contrast than the reference value and which are captured by using, as focal planes, two positions which are spaced apart in the image-capturing direction by the predetermined common interval. At the position where any of the plurality of sub-images has lower contrast than the reference value, e.g., at positions where no subject exists, the selecting unit 16 may select a single sub-image.

In step S19, the composing unit 17 composes two or more images to generate a composite image of the subject. For example, at the position where the selecting unit 16 has selected two sub-images, e.g., at the position where the subject exists among each position in the image, the composing unit 17 in the present embodiment may compose two sub-images for each position and may generate a single sub-image for the position. At the position where a single sub-image is selected by the selecting unit 16, e.g., at the position where no subject exists among each position in the image, the composing unit 17 may not compose sub-images.

The composing unit 17 may merge separate sub-images for separate positions in the image to generate an image in the size of the original image and also adjust brightness between the separate sub-images for separate positions. This allows for acquiring an image in which the plurality of subjects are clearly captured.

According to the operations as described above, in response to a not-in-focus focus bracket image being captured, the plurality of focus bracket images are captured once again with narrower intervals between adjacent focal planes in the image-capturing direction. This allows for reliably acquiring focus bracket images in which at least some of positions are in focus, and thus allows for, by using such focus bracket images in composition, reliably acquiring a composite image which has high contrast.

### (CULTURE BAG 2 AND SUPPORTING DEVICE FOR CAPTURING 3)

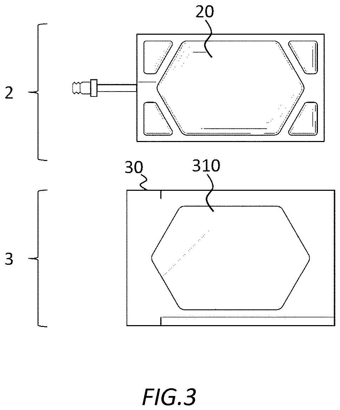

Fig. 3 shows a culture bag 2 along with a supporting device for capturing 3.

The culture bag 2 includes a flattened hexagonal-prism-like container 20, and is for culturing a cell or a microorganism which adheres to the interior of the container 20. The inside of the container 20 may be filled with culture solution. The container 20 may be formed of a gas-permeable film.

The supporting device 3 is composed of two plate-like members 30 which are openable and closable together with each other. Each plate-like member 30 has a translucent flat window 310 at its center. When the supporting device 3 sandwiches the culture bag 2 to bring it to a closed state, the windows 310 may pressurize the container 20 of the culture bag 2 from its both sides to planarize the interior of the container 20.

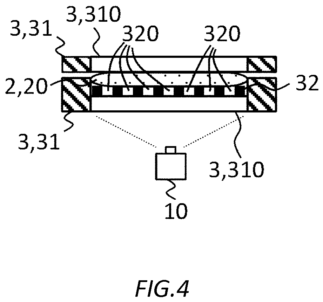

Fig. 4 shows a cross-section of the culture bag 2 and the supporting device 3. When the supporting devices 3 cramp the container 20, a plate-like perforated spacer 32 may be interposed between the window 310 of the supporting device 3 and the container 20 of the culture bag 2. The perforated spacer 32 may have a plurality of through-holes 320 which penetrate the spacer in the thickness direction, which ensures that gas can permeate into and out of the container 20. The plurality of through-holes 320 may be each shaped in a rectangular form, and may be arrayed in a lattice pattern as a whole. For example, when the image-capturing unit 10 captures a 20x enlarged image, the through-hole 320 may be shaped to be a square, 2.5mm on a side. A sub-image generated by the sub-image generating unit 15 may be smaller than the through-hole 320.

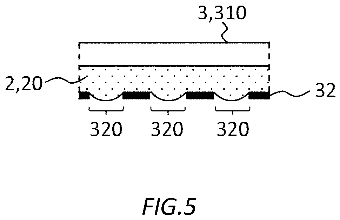

Fig. 5 shows a partially enlarged view of Fig. 4. The container 20 held by the supporting devices 3 may expand outside at the position of the through-hole 320 of the perforated spacer 32. This may cause the interior of the container 20 to have uneven deflection in the order of ±30µm in the image-capturing direction (upward and downward direction in the figure). In this case, the image-capturing control unit 11 may incrementally move the position of the focal plane by 1µm to capture 61 focus bracket images in total, for example.

### (EXAMPLE OF IMAGE)

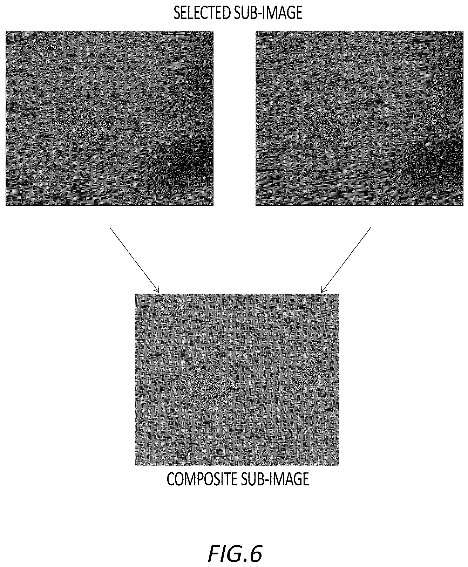

Fig. 6 shows sub-images before and after image composition. Upper in the figure are shown two sub-images which are to be composed, and which are selected by the selecting unit 16 out of the sub-images generated for each position of the plurality of focus bracket images captured by the image-capturing unit 10. The sub-image upper left in the figure is a sub-image which has the bright contrast, and the sub-image upper right in the figure is a sub-image which has the dark contrast. Lower in the figure is shown a composite sub-image acquired by composing these two sub-images. As shown in this figure, the apparatus 1 allows for acquiring a sharp image of each part of the subject.

### (VARIATION)

Note that in the embodiment as described above, the size detecting unit 14 is described to provide the size of each subject to the sub-image generating unit 15, but the size detecting unit 14 may provide a single common size to the sub-image generating unit 15. The common size may be the maximum size of each detected size. In this case, the sub-image generating unit 15 may generate a sub-image in the common size for each position of the subject detected by the position detecting unit 13.

Additionally, the sub-image generating unit 15 is described to generate a sub-image for the positions where no subject is detected, but the sub-image generating unit 15 may not generate any sub-image. In this case, the composing unit 17 may not merge the composed sub-images.

Additionally, the selecting unit 16 is described to select, for each position in the image, two sub-images which have higher contrast than the reference value and which are captured by using, as focal planes, two positions which are spaced apart in the image-capturing direction by the common interval, but may select, for each position in the image, two sub-images which are captured by using, as focal planes, two positions which are spaced apart in the image-capturing direction by a different interval. For example, the selecting unit 16 may select, for each position of the subject detected by the position detecting unit 13, two sub-images which are captured by using, as focal planes, two positions which are spaced apart in the image-capturing direction by an interval based on the size of the subject detected for the subject by the size detecting unit 14. The interval based on the size of the subject may be equal to or more than half the size of the subject i.e., a radius of the cell or the microorganism as the subject.

Additionally, the apparatus 1 is described to include the image-capturing unit 10 and the image-capturing control unit 11, but the apparatus 1 may not include one of these. If the apparatus 1 does not include the image-capturing unit 10, the acquiring unit 12 may acquire a plurality of focus bracket images captured by a capturing device outside the apparatus 1. If the apparatus 1 does not include the image-capturing control unit 11, an operator may manually cause the image-capturing unit 10 to capture a plurality of focus bracket images.

Additionally, the apparatus 1 is described to include the position detecting unit 13, the size detecting unit 14, and the sub-image generating unit 15, but the apparatus 1 may not include one of these. If the apparatus 1 does not include the position detecting unit 13, the sub-image generating unit 15 may generate a sub-image from each of the focus bracket images in a predetermined aspect. For example, the sub-image generating unit 15 may acquire a sub-image of each region surrounded by the vertical lines and horizontal lines set in a lattice pattern in the image. The size of the sub-image may be an average or a maximum value of the size of each subject detected by the size detecting unit 14, or may be a preset size. If the apparatus 1 does not include the size detecting unit 14, the sub-image generating unit 15 may generate a sub-image in the preset size. If the sub-image generating unit 15 generates a sub-image in the preset size, the apparatus 1 may include a setting unit which sets an adjusted size of the sub-image. The setting unit may, in response to a composite sub-image generated by the composing unit 17 being not in focus on the subject, set a smaller size of the sub-image, and cause the operations of steps S15 to S19 to be performed once again.

Additionally, the apparatus 1 is described to include the sub-image generating unit 15, but the apparatus 1 may not include the sub-image generating unit 15. If the apparatus 1 does not include the sub-image generating unit 15, the selecting unit 16 may select, out of the plurality of focus bracket images, two or more images which have higher contrast than the reference value, and the composing unit 17 may compose the two or more images selected by the selecting unit 16 to generate a composite image. This allows for acquiring a composite image which has high contrast even when capturing a subject a position of which is not determined in the image-capturing direction.

Various embodiments of the present invention may be described with reference to flowcharts and block diagrams whose blocks may represent (1) steps of processes in which operations are performed or (2) sections of apparatuses responsible for performing operations. Certain stages and sections may be implemented by dedicated circuit, programmable circuit supplied together with computer readable instructions stored on computer readable media, and/or processors supplied together with computer readable instructions stored on computer readable media. Dedicated circuits may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations designated in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, or the like.

The computer readable instruction may include: an assembler instruction, an instruction-set-architecture (ISA) instruction; a machine instruction; a machine dependent instruction; a microcode; a firmware instruction; state-setting data; or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instruction may be provided for a processor or programmable circuitry of a programmable data processing apparatus, such as a computer, locally or via a local area network (LAN), a wide area network (WAN) such as the Internet, or the like to execute the computer-readable instruction in order to create means for executing the operations specified in the flowcharts or block diagrams. Here, the computer may be a personal computer (PC), a tablet computer, a smartphone, a workstation, a server computer, or a computer such as a general purpose computer or a special purpose computer, or may be a computer system to which a plurality of computers are connected. Such computer system to which the plurality of computers are connected is also referred to as a distributed computing system, and is a computer in a broad sense. In a distributed computing system, a plurality of computers collectively execute a program by each of the plurality of computers executing a portion of the program, and passing data during the execution of the program among the computers as needed.

Examples of the processor include a computer processor, a central processing unit (CPU), a processing unit, a microprocessor, a digital signal processor, a controller, a microcontroller, and the like. The computer may include one processor or a plurality of processors. In a multi-processor system including a plurality of processors, the plurality of processors collectively execute a program by each of the processors executing a portion of the program, and passing data during the execution of the program among the processors as needed. For example, in execution of multiple tasks, each of the plurality of processors may execute a portion of each task pieces by pieces by performing task-switching for each time slice. In this case, which portion of one program each processor is responsible for executing dynamically changes. Moreover, which portion of the program each of the plurality of processor is responsible for executing may be determined statically by multiprocessor-aware programming.

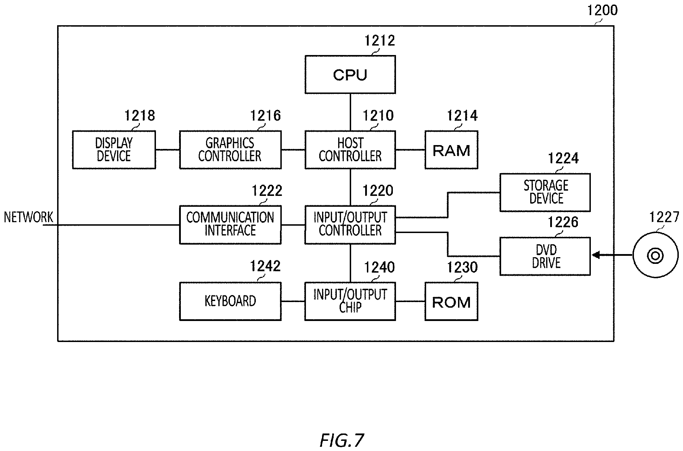

Fig. 7 represents an example of computer 1200 in which a plurality of aspects of the present invention may be wholly or partially embodied. A program that is installed in the computer 1200 can cause the computer 1200 to function as an operation associated with the apparatuses according to the embodiments of the present invention or as one or more sections of the apparatuses, or can cause the operation or the one or more sections to be executed, and/or can cause the computer 1200 to execute a process according to the embodiments of the present invention or a step of the process. Such a program may be performed by a CPU 1212 so as to cause the computer 1200 to perform certain operations associated with some or all of the blocks of flowcharts and block diagrams described herein.

The computer 1200 according to the present embodiment includes a CPU 1212, a RAM 1214, a graphics controller 1216, and a display device 1218, which are mutually connected by a host controller 1210. The computer 1200 also includes input/output units such as a communication interface 1222, a storage device 1224 e.g., a hard disk drive, a DVD-ROM drive 1226, and an IC card drive, which are connected to the host controller 1210 via an input/output controller 1220. The computer also includes legacy input/output units such as an ROM 1230 and a keyboard 1242, which are connected to the input/output controller 1220 via an input/output chip 1240.

The CPU 1212 operates according to programs stored in the ROM 1230 and the RAM 1214, thereby controlling each unit. The graphics controller 1216 obtains image data generated by the CPU 1212 on a frame buffer or the like provided in the RAM 1214 or in itself, and causes the image data to be displayed on a display device 1218.

The communication interface 1222 communicates with other electronic devices via a network. The storage device 1224 stores programs and data used by the CPU 1212 in the computer 1200. The DVD-ROM drive 1226 reads a program or data from a DVD-ROM 1227 and provides the program or data to the storage device 1224 via the RAM 1214. The IC card drive reads the programs and the data from the IC card, and/or writes the programs and the data to the IC card.

The ROM 1230 stores therein a boot program or the like that is performed by the computer 1200 at the time of activation, and/or a program that depends on the hardware of the computer 1200. The input/output chip 1240 may also connect various input/output units to the input/output controller 1220 via a parallel port, a serial port, a keyboard port, a mouse port, or the like.

Programs are provided by a computer readable medium such as the DVD-ROM 1227 or the IC card. The program is read from a computer readable medium, installed in the storage device 1224, the RAM 1214, or the ROM 1230 which are also examples of the computer readable medium, and executed by the CPU 1212. Information processing written in these programs is read by the computer 1200, and provides cooperation between the programs and the various types of hardware resources as described above. An apparatus or method may be configured by implementing the operation or processing of information in accordance with the usage of the computer 1200.

For example, when communication is performed between the computer 1200 and an external device, the CPU 1212 may perform a communication program loaded onto the RAM 1214 to instruct communication processing to the communication interface 1222, based on the processing described in the communication program. Under the control of the CPU 1212, the communication interface 1222 reads transmission data stored in a transmission buffer processing region provided in a recording medium such as the RAM 1214, the storage device 1224, the DVD-ROM 1227, or the IC card, transmits the read transmission data to the network, or writes reception data received from the network in a reception buffer processing region or the like provided on the recording medium.

In addition, the CPU 1212 may cause the RAM 1214 to read all or a necessary part of a file or database stored in an external recording medium such as the storage device 1224, the DVD-ROM drive 1226 (DVD-ROM 1227), the IC card, or the like, and may execute various types of processing on data on the RAM 1214. The CPU 1212 then writes back the processed data to the external recording medium.

Various types of information such as various types of programs, data, tables, and databases may be stored in a recording medium and subjected to information processing. The CPU 1212 may perform various types of processing on the data read from the RAM 1214, which includes various types of operations, information processing, condition judging, conditional branch, unconditional branch, search/replace of information, etc., as described throughout this disclosure and designated by an instruction sequence of programs, and writes the result back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may retrieve, out of the plurality of entries, an entry with the attribute value of the first attribute specified that meets a condition, read the attribute value of the second attribute stored in the entry, and thereby acquiring the attribute value of the second attribute associated with the first attribute satisfying a predefined condition.

The above-explained program or software modules may be stored in the computer readable media on or near the computer 1200. In addition, a recording medium such as a hard disk or a RAM provided in a server system connected to a dedicated communication network or the Internet can be used as the computer readable media, thereby providing the program to the computer 1200 via the network.

While the present invention has been described with the embodiments, the technical scope of the present invention is not limited to the above-described embodiments. It is apparent to persons skilled in the art that various alterations and improvements can be added to the above-described embodiments. It is also apparent from description of the claims that the embodiments to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described using phrases such as "first" or "next" for the sake of convenience in the claims, specification, or drawings, it does not mean that the process must be performed in this order.

### EXPLANATION OF REFERENCES

1: apparatus;
2: culture bag;
3: supporting device;
10: image-capturing unit;
11: image-capturing control unit;
12: acquiring unit;
13: position detecting unit;
14: size detecting unit;
15: sub-image generating unit;
16: selecting unit;
17: composing unit;
20: container;
30: plate-like member;
32: perforated spacer;
310: window;
320: through-hole;
1200: computer;
1210: host controller;
1212: CPU;
1214: RAM;
1216: graphics controller;
1218: display device;
1220: input/output controller;
1222: communication interface;
1224: storage device;
1226: DVD-ROM drive;
1227: DVD-ROM;
1230: ROM;
1240: input/output chip;
1242: keyboard.

## Claims

1. An apparatus comprising:
an acquiring unit which acquires a plurality of images captured by changing a position of a focal plane relative to a subject in an image-capturing direction;
a selecting unit which selects, out of the plurality of images, two or more images which have higher contrast than a reference value; and
a composing unit which composes the two or more images to generate a composite image.

2. The apparatus according to claim 1, further comprising:
a sub-image generating unit which generates, from each of the plurality of images, a sub-image of at least one position in the image which is a common position among the plurality of images, wherein
the sub-image includes a plurality of sub-images,
the selecting unit selects, out of the plurality of sub-images for each position in the image, two or more sub-images which have higher contrast than the reference value, to select, out of the plurality of images, the two or more images which have higher contrast than the reference value, and
the composing unit composes the two or more sub-images for each position in the image to generate a composite sub-image, to compose the two or more images to generate the composite image.

3. The apparatus according to claim 2, further comprising:
a size detecting unit which detects a size of the subject in the image, wherein
the sub-image generating unit generates each sub-image in the size detected by the size detecting unit.

4. The apparatus according to claim 2 or 3, further comprising:
a position detecting unit which detects a position of the subject in the image, wherein
the sub-image generating unit generates each sub-image at the position detected by the position detecting unit.

5. The apparatus according to any one of claim 2 to 4, wherein
the sub-image generating unit generates, from each of the plurality of images, a sub-image for each of the plurality of positions in the image, and
the selecting unit, for each of the plurality of positions in the image, selects two sub-images which have higher contrast than the reference value and which are captured by using, as focal planes, two positions which are spaced apart in the image-capturing direction by a predetermined common interval.

6. The apparatus according to any one of claim 2 to 5, wherein
the sub-image generating unit generates, from each of the plurality of images, a sub-image for each of the plurality of positions in the image, and
the composing unit merges separate sub-images for separate positions in the image and which include the composite sub-image, and also adjusts brightness between the separate sub-images.

7. The apparatus according to claim 6, wherein
in response to any of a plurality of sub-images generated by the sub-image generating unit for a same position in the image having equal or lower contrast than the reference value, the selecting unit selects a single sub-image out of the plurality of sub-images for the same position, and
the composing unit merges separate sub-images including the single sub-image as separate sub-images and sub-images for the same position.

8. The apparatus according to any one of claim 2 to 7, wherein the acquiring unit acquires the plurality of images captured with the plurality of subjects arranged at different positions from each other in the image-capturing direction.

9. The apparatus according to any one of claim 1 to 8, further comprising:
an image-capturing unit which captures the plurality of images, wherein
the acquiring unit acquires the plurality of images from the image-capturing unit.

10. The apparatus according to claim 9, further comprising:
an image-capturing control unit which changes a position of a focal plane relative to the subject in the image-capturing direction, and causes the image-capturing unit to capture the plurality of images.

11. The apparatus according to claim 10, wherein the image-capturing control unit, in response to a not-in-focus image being captured, causes the image-capturing unit to capture the plurality of images once again with narrower intervals between adjacent focal planes in the image-capturing direction.

12. The apparatus according to any one of claim 1 to 11, wherein the subject is a cell or a microorganism.

13. The apparatus according to claim 12, wherein the subject is adhered to an interior of a culture bag.

14. A method comprising:
acquiring a plurality of images captured by changing a position of a focal plane relative to a subject in an image-capturing direction;
selecting, out of the plurality of images, two or more images which have higher contrast than a reference value; and
composing the two or more images to generate a composite image.

15. Aprogram that, when executed by a computer, causes the computer to function as:
an acquiring unit which acquires a plurality of images captured by changing a position of a focal plane relative to a subject in an image-capturing direction;
a selecting unit which selects, out of the plurality of images, two or more images which have higher contrast than a reference value; and
a composing unit which composes the two or more images to generate a composite image.
